# EUROPÄISCHE PATENTANMELDUNG

(11) **EP 1 477 503 A2**
(43) Veröffentlichungstag der Anmeldung: **17.11.2004**
(21) Anmeldenummer: 04011073.6
(22) Anmeldetag: 10.05.2004
(51) Int. Cl.: C08G 61/08

(54) **Trennmittel für bituminöse Stoffe und seine Verwendung**

(30) Priorität: 15.05.2003 DE 10321933
(71) Anmelder: Schill + Seilacher "Struktol" Aktiengesellschaft, 22113 Hamburg (DE)
(72) Erfinder: Petri, Clara, 21423 Winsen (DE)
(74) Vertreter: Bunke, Holger, Dr.rer.nat. Dipl.-Chem.

(57) **Zusammenfassung**

Die Erfindung betrifft ein Trennmittel für bituminöse Stoffe, gekennzeichnet durch eine mineralölfreie Zusammensetzung, enthaltend eine wäßrige Dispersion eines Polyalkenamers, vorzugsweise eines Polyoctenamers. Das Trennmittel kann zusätzlich ein Dispergiermittel und mindestens einen Fettsäureester enthalten. Das Trennmittel kann auch zur Reinigung von mit bituminösen Stoffen kontaminierten Flächen verwendet werden.

Die Erfindung betrifft auch die Verwendung von Polyalkenameren als Trennund Reinigungsmittel, einschließlich der Verwendung von Polyoctenameren als Reinigungsmittel für mit bituminösen Stoffen kontaminierte Kraftfahrzeuge, Straßenbaumaschinen und Umweltflächen. Die erfindungsgemäßen Mittel sind biologisch abbaubar, nicht toxisch und nicht wassergefährdend.

## Beschreibung

Die Erfindung betrifft ein Trennmittel für bituminöse Stoffe und seine Verwendung.

Unter "bituminösen Stoffen" versteht man ganz allgemein Bitumen, Asphalte, Teere und Peche. Bitumen sind schmelzbare, hochmolekulare Kohlenwasserstoffgemische, die bei der schonenden Aufarbeitung von Erdöl gewonnen werden, und die in Schwefelkohlenstoff löslichen Anteile der Naturasphalte. Asphalte sind Gemische von Bitumen und Mineralstoffen.

Bituminöse Stoffe werden in großen Mengen für den Straßenbau benötigt. Sie werden in der Regel bei Temperaturen zwischen 60 und 100°C transportiert und verarbeitet. Aufgrund ihrer Klebrigkeit auch bei diesen höheren Temperaturen müssen LKW-Ladeflächen, Werkzeuge und die mit den bituminösen Stoffen in Berührung kommenden Flächen von Straßenbaumaschinen, Walzen und dergleichen mit Trennmitteln besprüht werden, um die Funktionsfähigkeit dieser Flächen, Werkzeuge und Maschinen zu erhalten und die Oberflächen vor Verschmutzung zu schützen.

Die im Straßenbau verwendeten Asphaltmischungen wurden in den letzten Jahren durch Zugabe sogenannter "High Performance Additive" immer stärker modifiziert, um speziellen Anforderungen gerecht zu werden; so setzt man beispielsweise den Asphaltmischungen Polyglykole, Styrol-Butadien-Copolymere, Styrol-Butadien-Amin-Copolymere zu, wodurch die Klebrigkeit der Asphaltmischungen in vielen Fällen noch erhöht wird.

Bisher wurde als effektives Trennmittel zum Schutz der LKW-Ladeflächen beim Transport von bituminösen Stoffen, insbesondere von Asphalt, und zur Erhaltung der Funktionsfähigkeit von Werkzeugen und Maschinen bei der Verarbeitung bituminöser Stoffe leichtes Heizöl bzw. Dieselkraftstoff verwendet, weil dieses Mineralöl überall leicht verfügbar und vergleichsweise billig ist. Dabei hat man aber bisher die umweltschädlichen und gesundheitsschädigenden Wirkungen des Mineralöls ebenso ignoriert wie die Gefahren, die von seinem niedrigen Flammpunkt von zwischen 55 und 60°C ausgehen. Ein weiterer wesentlicher Nachteil des Mineralöls besteht darin, daß es Asphaltmischungen aufgrund des hohen Lösevermögens für Bitumen entmischt und die Kohäsion des Asphalts deutlich verringert. Für die neuen Spezialasphaltmischungen, die polymere Bindemittel, Elastomere, Kautschuke und dergleichen enthalten können, sind Dieselkraftstoff und Heizöl als Trennmittel ungeeignet, weil sie diesen gegenüber entweder eine ungenügende Trennwirkung haben oder aber zersetzend wirken.

Der Erfindung liegt deshalb die Aufgabe zugrunde, ein wirksames Trennmittel für bituminöse Stoffe anzugeben, das umweltfreundlich und nicht gesundheitsschädigend ist und außerdem auch mit solchen Asphaltsorten verträglich ist, die Anteile von Elastomeren oder Kautschuken enthalten. Außerdem soll das Trennmittel einen höheren Flammpunkt besitzen als Dieselkraftstoff oder Heizöl, und es soll zu einem möglichst günstigen Preis verfügbar sein.

Diese Aufgabe wird erfindungsgemäß gelöst durch ein Trennmittel für bituminöse Stoffe, das gekennzeichnet ist durch eine mineralölfreie Zusammensetzung, die eine wäßrige Dispersion eines Polyalkenamers enthält.

Polyalkenamere, auch Polyalkenylene genannt, sind Polymere, die durch Ringöffnungspolymerisation oder Metathesepolymerisation von Cyclolefinen unter Erhalt der Doppelbindung anfallen. Die bekanntesten und allgemein am Markt erhältlichen Polyalkenamere sind Polycyclopentadiene, Polypentenamere, Polyoctenamere und Polynorbomene. Die Polyalkenamere sind vulkanisierbare ungesättigte Elastomere mit Kautschuk-Charakter. Sie werden deshalb zur Modifizierung von Kautschukmischungen verwendet, um die Verarbeitungseigenschaften von Kautschuken zu verbessern. Ein bekanntes Handelsprodukt ist das unter der Marke Vestenamer® erhältliche trans-Polyoctenamer oder "TOR" mit einer Molmasse von ca. 60.000 g/mol.

Im Rahmen der vorliegenden Erfindung wurde nun überraschenderweise gefunden, daß eine wäßrige Dispersion eines solchen Polyalkenamers ein ausgezeichnetes Trennmittel für bituminöse Stoffe, insbesondere für Bitumen und Asphalt, darstellt, aber auch zur Reinigung von mit bituminösen Stoffen kontaminierten Flächen, Werkzeugen und Maschinen verwendet werden kann.

Im Vergleich zu den bisher als Trennmitel verwendeten Mineralölen besitzt das erfindungsgemäße Trennmittel ganz wesentliche Vorteile:
- es ist nicht nur für klassische Asphaltmischungen, sondern auch für mit Polymeren, Elastomeren oder Kautschuken modifizierte Spezialasphaltmischungen ein sehr effektives Trennmittel, welches die Kohäsion der Asphaltmischungen nicht negativ beeinträchtigt;
- es ist ein exzellentes Reinigungsmittel für mit bituminösen Stoffen kontaminierte Oberflächen;
- der Flammpunkt liegt zwischen 183 und 185°C;
- die Haftung zwischen dem beim Straßenbau verwendeten mineralischen Untergrund (Kies, Steine, Sand) und dem Asphalt wird durch das Trennmittel nicht beeinflußt;
- es ist nicht toxisch, nicht gesundheitsschädlich, nicht wassergefährdend, phosphatfrei, halogenfrei, biologisch abbaubar und damit insgesamt umweltfreundlich;
- außerdem ist es sprühfähig, in großen Mengen leicht verfügbar und billig herstellbar.

Das erfindungsgemäße Polyalkenamer ist vorzugsweise ausgewählt aus der Gruppe der Polycyclopentadiene, Polypentenamere, Polyoctenamere und Polynorbornene. Besonders bevorzugt werden Polyoctenamere eingesetzt, beispielsweise TOR.

Das erfindungsgemäße Trennmittel enthält vorzugsweise 1 - 80 Gew.-% Polyalkenamer oder eines Gemischs aus mehreren der genannten Polyalkenamere. Besonders bevorzugt ist ein Gehalt an Polyalkenameren von 3 - 15 Gew.-%, und noch vorteilhafter von 3,5 bis 5,5 Gew.-%.

Vorzugsweise enthält das Trennmittel zusätzlich ein Dispergiermittel, um eine stabile wäßrige Dispersion des Polyalkenamers zu erhalten. Als Dispergiermittel besonders bevorzugt ist Natriumdodecylbenzylsulfonat. Aber für den Fachmann ist klar, daß jedes andere, im industriellen Maßstab leicht verfügbare, als Dispergier- oder Emulgiermittel wirksame Detergenz ebenso verwendet werden kann.

Vorzugsweise enthält das erfindungsgemäße Trennmittel zusätzlich mindestens einen Fettsäureester einer gesättigten oder ungesättigten Fettsäure mit 16 bis 32 Kohlenstoffatomen. Besonders bevorzugte Fettsäureester sind Methylester und/oder Ethylester von aus pflanzlichen Ölen gewonnenen Fettsäuren. Besonders vorteilhaft werden Methylester von aus Rapsöl gewonnenen Fettsäuren verwendet.

Vorzugsweise beträgt der Anteil der Fettsäureester an der Gesamtzusammensetzung 30 - 90 Gew.-%, besonders bevorzugt 40 - 60 Gew.-%.

Wie bereits erwähnt, wird das erfindungsgemäße Trennmittel vorzugsweise zur Reinigung von mit bituminösen Stoffen kontaminierten Flächen eingesetzt, insbesondere zur Reinigung der Ladeflächen von LKWs, zur Reinigung von Werkzeugen, die bei der Verarbeitung der bituminösen Stoffe im Straßenbau, im Bergbau und ganz allgemein im Hoch- und Tiefbau verwendet werden, und zur Reinigung von Straßenbaumaschinen, Walzen und dergleichen, aber auch als Handreinigungsmittel und als Mittel zur Reinigung von Tieren wie z.B. kontaminierten Seevögeln oder Hundepfoten.

Ein weiterer Aspekt der Erfindung ist die Verwendung von Polyalkenameren als Trenn- und Reinigungsmittel, die für den Fachmann neu und überraschend ist, weil die Polyalkenamere bisher nur zur Modifizierung von Kautschukmischungen verwendet und nur in diesem Zusammenhang bekannt waren.

Erfindungsgemäß besonders bevorzugt ist die Verwendung von Polyoctenameren als Trennmittel für bituminöse Stoffe, insbesondere für Bitumen und Asphalt.

Ein weiterer, besonders wichtiger und vorteilhafter Aspekt der Erfindung besteht in der Verwendung von Polyoctenameren als Reinigungsmittel für mit bituminösen Stoffen, insbesondere Bitumen und Asphalt, kontaminierte Kraftfahrzeuge, Straßenbaumaschinen und Umweltflächen.

Unter "Umweltflächen" sind insbesondere die Meeresoberfläche, der Meeresgrund, Flußufer und Meeresstrände zu verstehen, die mit Schweröl, Raffinerierückständen und ähnlichen Erdölprodukten beispielsweise durch Tankerunfälle, Schiffskollisionen und dergleichen kontaminiert worden sind. Zu den Umweltflächen gehören aber auch Hafenanlagen, die Umgebung von Ölbohrstellen, Ölverladeanlagen, Bohrtürmen, Bohrinseln und dergleichen. Kontaminierte Kraftfahrzeuge können nicht nur LKWs sein, sondern auch Schiffe und Flugzeuge.

Eine besonders bevorzugte Zusammensetzung für das erfindungsgemäße Trenn- und Reinigungsmittel besteht beispielsweise aus

| | |
|---|---|
| Fettsäuremethylester (aus Rapsöl) | 54,3 % |
| Polyoctenamer | 4,2 % |
| Dispergiermittel (Natriumdodecylbenzylsulfonat, 20 %ige wäßrige Lösung) | 29,3 % |
| entmineralisiertes Wasser | 12,2 %. |
| | 100 % |

## Patentansprüche

1. Trennmittel für bituminöse Stoffe, **gekennzeichnet durch** eine mineralölfreie Zusammensetzung, enthaltend eine wäßrige Dispersion eines Polyalkenamers.

2. Trennmittel nach Anspruch 1, bei dem das Polyalkenamer ausgewählt ist aus der Gruppe der Polycyclopentadiene, Polypentenamere, Polyoctenamere und Polynorbornene.

3. Trennmittel nach Anspruch 2, **dadurch gekennzeichnet, daß** das Polyalkenamer ein Polyoctenamer ist.

4. Trennmittel nach einem der Ansprüche 1 bis 3, **dadurch gekennzeichnet, daß** der Gehalt an Polyalkenamer 1 - 80 Gew.-% beträgt.

5. Trennmittel nach Anspruch 4, **dadurch gekennzeichnet, daß** der Gehalt an Polyalkenamer 3 - 15 Gew.-% beträgt.

6. Trennmittel nach Anspruch 5, **dadurch gekennzeichnet, daß** der Gehalt an Polyalkenamer 3,5 - 5,5 Gew.-% beträgt.

7. Trennmittel nach einem der Ansprüche 1 bis 6, **dadurch gekennzeichnet, daß** es zusätzlich ein Dispergiermittel enthält.

8. Trennmittel nach Anspruch 7, **dadurch gekennzeichnet, daß** es als Dispergiermittel Natriumdodecylbenzylsulfonat enthält.

9. Trennmittel nach einem der Ansprüche 1 bis 8, **dadurch gekennzeichnet, daß** es zusätzlich mindestens einen Fettsäureester einer gesättigten oder ungesättigten Fettsäure mit 16 - 32 C-Atomen enthält.

10. Trennmittel nach Anspruch 9, **dadurch gekennzeichnet, daß** es Methylester und/oder Ethylester von aus pflanzlichen Ölen gewonnenen Fettsäuren enthält.

11. Trennmittel nach Anspruch 9 oder 10, **dadurch gekennzeichnet, daß** der Anteil der Fettsäureester an der Gesamtzusammensetzung 30 - 90 Gew.-% beträgt.

12. Trennmittel nach Anspruch 11, **dadurch gekennzeichnet, daß** der Anteil der Fettsäureester an der Gesamtzusammensetzung 40 - 60 Gew.-% beträgt.

13. Verwendung des Trennmittels gemäß einem der Ansprüche 1 bis 12 zur Reinigung von mit bituminösen Stoffen kontaminierten Flächen.

14. Verwendung von Polyalkenameren als Trenn- und Reinigungsmittel.

15. Verwendung von Polyoctenameren als Trennmittel für bituminöse Stoffe, insbesondere für Bitumen und Asphalt.

16. Verwendung von Polyoctenameren als Reinigungsmittel für mit bituminösen Stoffen, insbesondere Bitumen und Asphalt, kontaminierte Kraftfahrzeuge, Straßenbaumaschinen und Umweltflächen.
